# FASCICULE DE BREVET EUROPEEN

(11) **EP 0 758 922 B1**
(45) Date de publication et mention de la délivrance du brevet: **19.01.2000**
(21) Numéro de dépôt: 95920927.1
(22) Date de dépôt: 09.05.1995
(51) Int. Cl.: B01J 39/04, B01J 49/00, A23C 9/144, A23C 9/146

(54) **PROCEDE DE DEMINERALISATION D'UN LIQUIDE CONTENANT EN SOLUTION DES MATIERES ORGANIQUES ET DES SELS**
VERFAHREN ZUR DEMINERALISIERUNG EINER FLÜSSIGKEIT, DIE LÖSUNGEN VON ORGANISCHEN SUBSTANZEN UND SALZEN ENTHÄLT
PROCESS FOR THE DEMINERALIZATION OF A LIQUID CONTAINING DISSOLVED ORGANIC SUBSTANCES AND SALTS

(30) Priorité: 09.05.1994 FR 9405682
(43) Date de publication de la demande: 26.02.1997
(73) Titulaire: SOCIETE ANONYME FRANCAISE D'INGENIERIE ET DE RECHERCHE, 83550 Vidauban (FR)
(72) Inventeur: NOEL, Roland, F-83550 Vidauban (FR)
(74) Mandataire: Robert, Jean-Pierre
(86) Numéro de dépôt international: FR9500595
(87) Numéro de publication internationale: WO9530482

(56) Documents cités:
- WO-A-92/12642
- FR-A- 2 391 653
- FR-A- 2 447 151
- US-A- 3 637 480
- US-A- 5 084 285
- DATABASE WPI Week 8017 Derwent Publications Ltd., London, GB; AN 80-30494C & NL-A-7 810 035 (HOLVRIEKA) , 4 Octobre 1980
- CHEMICAL ABSTRACTS, vol. 95, no. 17, 26 Octobre 1981 Columbus, Ohio, US; abstract no. 148835b, B.M. ENNIS 'THE EFFECT OF THE REPLACEMENT OF CALCIUM WITH SODIUM ON THE DEMINERALIZATION OF DEPROT. ACID WHEY BY ELECTRODIALYSIS' page 509; colonne 1; & N.Z.J. DAIRY SCI. TECHNOL., vol. 16, no. 2, 1981 pages 167-178, ENNIS

## Description

L'invention concerne un procédé de déminéralisation d'un liquide contenant des produits organiques en solution.

Dans de nombreux secteurs de l'industrie agro-alimentaire il existe des produits ou effluents liquides qui contiennent en solution des sels minéraux et des produits organiques tels que des protéines, des sucres, des acides organiques et leurs sels, des acides aminés...

Les matières organiques forment la fraction valorisable de ces liquides tandis que les sels minéraux constituent la fraction gênante qu'il convient d'extraire.

L'extraction de ces sels, ou déminéralisation, ne comporte pas de difficultés au plan des principes et des installations de laboratoire. En revanche, les installations industrielles qui mettent en oeuvre ces principes doivent en plus satisfaire à des exigences d'ordre économique et répondre aux contraintes extérieures telles que le respect de l'environnement et des règles relatives à la pollution.

Parmi les techniques connues pour la déminéralisation de tels liquides, on citera l'utilisation de résines échangeuses d'ions (cationiques ou anioniques), la précipitation (par la chaleur, par alcalinisation...), l'insolubilisation (par exemple des protéines et du lactose avec de l'alcool méthylique), la dialyse, l'électrodialyse, la filtration au travers des membranes prévues à cet effet mettant en jeu les équilibres physiques et osmotiques...

Un procédé industriel fait nécessairement appel à plusieurs de ces techniques avec leurs avantages et leurs inconvénients qui sont des facteurs de choix selon que l'on souhaite privilégier tel ou tel aspect de la production au détriment de tel ou tel autre pour en tout état de cause un bilan économique déterminé.

A titre illustratif, on mentionnera par exemple que la technique par échange d'ions sur résines permet d'obtenir une déminéralisation très poussée mais avec des rejets extrêmement polluants, des pertes organiques non négligeables et une consommation importante de réactifs et d'eau.

L'électrodialyse de liquide contenant des matières organiques ne permet qu'une déminéralisation partielle et principalement des sels monovalents ce qui conduit à de nombreux inconvénients si le liquide à traiter présente des alcalino-terreux (calcium, magnésium, ...) En effet ceux-ci sont liés aux matières organiques et sont un facteur d'encrassement des membranes qui, conjugué au fait que les charges électriques diminuent en nombre du fait de la déminéralisation, augmente la résistance électrique du système donc la consommation énergétique. En outre, ce procédé est très consommateur d'eau et demande de procéder à de fréquents nettoyages. Chaque nettoyage demande de chasser le produit avec de l'eau d'où une dilution et/ou des pertes de produit traité. Il demande également dans certains cas de procéder à des inversions hydrauliques et électriques pour décrasser les membranes.

L'installation nécessaire à la mise en oeuvre de ces successions de cycles déminéralisation-nettoyage est compliquée avec de nombreuses vannes, pompes et canalisations.

La filtration notamment la nanofiltration met en oeuvre des membranes spécifiques qui sont surtout efficaces à l'égard des ions monovalents. Par ailleurs du fait des équilibres osmotiques la déminéralisation par cette technique simple à mettre en oeuvre est limitée à 30 - 35 % des sels présents à l'origine dans le liquide à traiter.

L'invention concerne un procédé de déminéralisation d'un liquide contenant en solution des matières organiques et des sels minéraux avec, comme rappelé au préambule de la revendication 1 :
- une percolation du liquide sur une résine d'échange d'ions cationique forte,
- un passage dans au moins un électrodialyseur dit "à deux compartiments" comportant une pluralité de membranes anioniques et une pluralité de membranes cationiques intercalées, du liquide issu de l'étape précédente et d'autre part, d'une saumure d'accueil des ions issus du liquide,
- et une régénération de la résine échangeuse d'ions par la saumure.

Le liquide percolant sur la résine chargée d'ions monovalents tels que Na⁺ ou K⁺ échange ses cations divalents contre ces ions monovalents si bien que le produit en sortie de colonne de résine échangeuse d'ion est un liquide pratiquement débarrassé de ses cations divalents tels que Ca⁺⁺ ou Mg⁺⁺. Il s'agit là d'un liquide "adouci" comme l'eau est adoucie, c'est-à-dire débarrassée de son calcium, selon une technique semblable.

Cette absence d'ions alcalino-terreux a pour conséquence un bien meilleur fonctionnement de l'électrodialyseur dans lequel le liquide "adouci" pénètre. En effet ne contenant que des ions monovalents la déminéralisation s'effectue de manière beaucoup plus facile et rapide. On ne constate plus de précipité au droit des membranes donc d'encrassement de celles-ci. Il n'est plus nécessaire de procéder à de fréquents inversions hydrauliques et électriques pour procéder au nettoyage des cellules d'électrodialyse. Les poussages à l'eau ne sont mis en oeuvre que pour quelques nettoyages (leur fréquence est de 15 à 20 fois moindre que celle des inversions dans les électrodialyseurs utilisés classiquement en présence de sels divalents en milieu organique). Il y a donc moins de dilution moins de pertes de produit et une moindre consommation d'eau (voir document New Zealand Journal of DDairy Science and Technology, 16. 167-178 (1981).

En outre, et ceci est extrêmement bénéfique, la saumure ne contenant plus que des ions monovalents peut être concentrée 10 à 15 fois plus qu'une saumure contenant des ions divalents qui possèdent une fâcheuse tendance à rapidement précipiter lorsque la concentration s'élève.

La saumure qui circule dans l'électrodialyseur peut servir à la regénération de la résine échangeuse d'ions (voir document US-A-3 637 480). Mais cette saumure, pour être efficace, devrait être une solution beaucoup plus concentrée en sels que ne peut l'être une saumure selon ce document. Cette concentration rend la conduite de l'électrodialyseur délicate et insuffisamment sûre en exploitation industrielle, lorsqu'on traite un liquide dont la concentration en sels est de l'ordre de 5 à 6g/l.

On a donc proposé deux possibilités industrielles pour résoudre ce problème délicat au moins aujourd'hui.

La première consiste à procéder, selon la partie caractérisante de la revendication 1, à cette préconcentration du produit (extraction de l'eau à raison des 2/3 ou des 3/4 du volume initial d'eau) portant la concentration en sels du produit traité par l'électrodialyse à environ 25g/l. Il est alors possible dans des conditions de sécurité satisfaisantes pour l'installation de procéder à une première phase d'électrodialyse avec une saumure concentrée à 90 ou 100 g/l. Lors de cette première phase, le volume de la saumure à forte concentration s'accroit du fait du transfert d'ions et de l'ajustement de sa teneur en sels par ajout de saumure à 35 g/litre. L'excès de saumure est stocké dans un réservoir et servira à la régénération de la résine cationique forte.

Le produit traité voit donc sa teneur en sels diminuer, ce qui accroit l'écart avec le teneur en sels de la saumure, d'où une conduite plus délicate de l'électrodialyseur et un rendement faradique qui chute. On choisit alors d'abaisser la concentration en sels de la saumure par ajout d'eau pour ensuite la maintenir par exemple aux environs de 35-40 g/l., alors que la teneur en sels du liquide en cours de traitement peut être parvenue à 2,5 g/l. Le moment où on procède à ce changement de concentration est décidé en fonction de la valeur des paramètres de fonctionnement de l'électrodialyseur surveillés en permanence.

Lorsque la déminéralisation a atteint le seuil souhaité, le traitement est arrêté et la saumure à 35-40 grammes de sels par litre constitue la saumure de départ pour le traitement du batch suivant.

Une seconde possibilité est envisageable lorsque notamment une préconcentration du liquide à traiter n'est pas souhaitable. Elle est réalisée selon la partie caractérisante de la revendication 2. Dans ce cas, on ajuste la concentration en sels de la saumure à une valeur (35-40 g/l) telle qu'elle permette un fonctionnement optimal de l'électrodialyseur compte tenu de la teneur en sels du liquide à traiter (par exemple de 5 à 6 g/l. pour un lactosérum). On procède dans le même temps, dans un autre électrodialyseur ou dans une fraction des compartiments du précédent, à une déminéralisation de cette saumure au profit d'une autre saumure qui, elle, sera portée à une concentration de 100 g/l. environ.

Cette saumure concentrée possède au moins un avantage supplémentaire du fait de son degré élevé de concentration (entre 80 - 140 grammes par litres). En effet, il s'agit là d'une solution riche en cations Na⁺ K⁺ qui peut être utilisée sans autre traitement comme agent de régénération de la résine cationique forte. Alors les ions divalents retenus par la résine (calcium, magnésium...) sont chassés par les ions monovalents (sodium, potassium) de la saumure. On comprend qu'il n'est pas rejeté autre chose que les sels extraits du liquide traité, à la différence des autres procédés où (par exemple lors d'une régénération à l'acide chlorhydrique et soude) on rejette des sels provenant de l'agent régénérant s'ajoutant aux sels extraits.

Le procédé selon l'invention se distingue des procédés usuels connus à ce jour par son absence de besoin en eau et en réactif, ce qui est une source d'économie considérable, et une qualité nettement supérieure à ce qui est aujourd'hui connu, du produit obtenu.

Le produit sortant de l'électrodialyseur est débarrassé d'environ 90 - 95 % de ses sels minéraux et préconcentré, ce à un coût très nettement inférieur aux procédés connus pour les mêmes performances.

Pour parfaire cette déminéralisation, notamment lorsque celle-ci est réalisée sans préconcentration préalable à l'électrodialyse, il est possible de traiter le produit au moyen d'une étape supplémentaire de nanofiltration, ce qui est possible du fait de l'élimination préalable des ions divalents par la résine. Le perméat consiste en de l'eau chargée des ions monovalents encore présents dans le produit. La quantité d'eau que l'on peut extraire à cette phase est telle que le produit sortant des nanofiltres est concentré à environ 220 grammes de matière sèche par litre, ceci sans difficultés particulières.

L'eau chargée de ces ions monovalents issue de l'étape de nanofiltration peut avantageusement être utilisée comme eau de lavage de la colonne de résine et peut être introduite dans l'électrodialyseur dans lequel on procède en même temps à une inversion du sens du courant électrique. On parvient ainsi à débarrasser des membranes des impuretés organiques qu'elles auraient pu retenir au cours des 15 à 20 cycles de fonctionnement passés sans nettoyage. Ici encore, la consommation de produits nécessaires au nettoyage est réduite de manière importante. Cette eau peut également constituer le produit de base de la saumure.

Enfin dans une variante de réalisation on peut placer en tête du procédé aux lieu et place de la colonne de résine cationique, une colonne d'un mélange de résines fortes cationiques et anioniques. L'avantage de procéder de la sorte tient à la possibilité d'éliminer au premier stade du traitement une fraction des anions organiques en les remplaçant par des anions minéraux. On diminue ainsi la présence des phosphates et sulfates qui sont une gêne pour les phases suivantes d'électrodialyse et de nanofiltration. Il existe cependant un léger inconvénient à procéder de la sorte : il se crée des précipités de sulfates et de phosphates au sein de la résine. Une solution acceptable pour éliminer ces précipités lors de la régénération réside dans une légère acidification de la saumure ou du liquide de nettoyage pour dissoudre ces précipités.

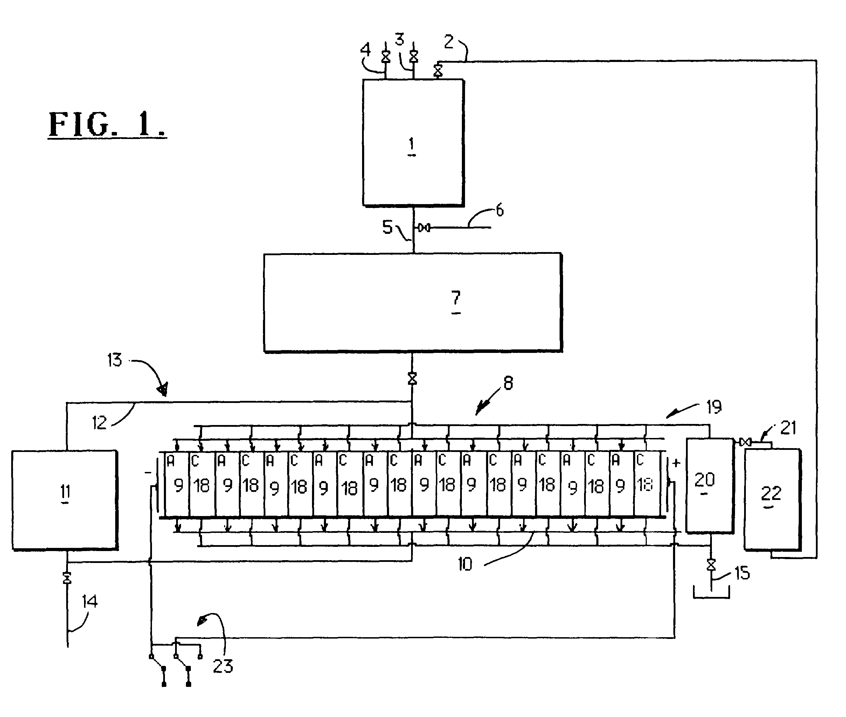

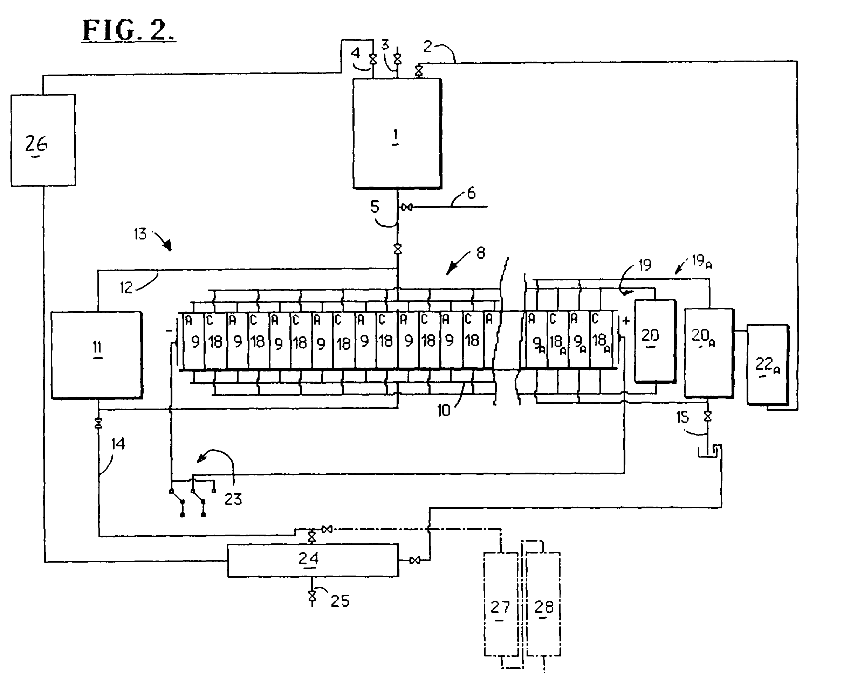

D'autres caractéristiques et avantages ressortiront de la description donnée ci-après d'un mode de réalisation de l'invention faite en référence aux dessins annexés qui représentent:
- en figure 1, une installation pour mettre en oeuvre les diverses phases du procédé de l'invention dans une version avec préconcentration,
- en figure 2, une installation sans préconcentration préalable à l'électrodialyse.

Pour les besoins de l'exposé, on prendra comme exemple de liquide à déminéraliser un lactosérum provenant d'un lait dont on a extrait la caséine.

Une colonne 1 de résine cationique forte comporte en entrée une arrivée 2 de lactosérum à déminéraliser, une arrivée 3 de réactif de régénération et une arrivée 4 de liquide de lavage, avec leurs moyens de vannage propres pour introduire sélectivement ces produits. La sortie 5 de cette colonne est soit dérivée en 6 pour un rejet soit introduite dans un préconcentreur 7 (par exemple par évaporation). A la sortie de ce concentreur 7, le lactosérum est introduit dans un circuit 13 qui comprend un électrodialyseur 8 dit "à deux compartiments" dont les cellules 9 sont délimitées par une membrane cationique C et une membrane anionique A, ce de manière connue en soi. A ce propos, on notera que les membranes sont spécifiques aux ions monovalents et que les membranes de tête (celle qui séparent l'électrolyte entourant les électrodes de tête des cellules adjacentes) sont en matériau connu sous le nom commercial de NAFION.

Chacune de ces cellules 9 est reliée à un collecteur 10 qui met l'électrodialyseur 8 en communication avec un réservoir 11 duquel une canalisation 12 permet une circulation en boucle fermée du lactosérum, entre le réservoir 11 et l'électrodialyseur 8, formant ainsi le circuit 13 possédant une sortie 14.

Les cellules 18 de l'électrodialyseur 8 qui sont adjacentes à celles 9 parcourues par le lactosérum, sont parcourues par une solution de concentration (la saumure) qui circule dans une boucle 19 comportant un réservoir 20 duquel peut être extrait par un conduit 21 - par exemple de trop plein - de la saumure destinée après stockage dans un réservoir 22 à être amenée à l'entrée 3 de régénération de la colonne de résine. Une amenée 15 est prévue pour la boucle 19, soit pour de l'eau soit pour une saumure à faible concentration.

Enfin, on a représenté à la figure 1 un basculeur électrique 23 qui symbolise un dispositif de la tension d'alimentation de l'électrodialyseur 8.

La présence de résines échangeuse d'ions impose un fonctionnement par batch de la première phase du procédé selon l'invention, c'est-à-dire en traitant le liquide par fractions de volume déterminé. Entre deux "batch", on procède à un cycle de régénération de la résine et à intervalles réguliers (par exemple toutes les 10 à 12 heures), on procède à un nettoyage complet de l'installation. De manière connue, une installation industrielle comporte au moins deux circuits, comme celui représenté schématiquement à la figure, en parallèle de sorte qu'un circuit procède au traitement du liquide pendant que l'autre est en phase de régénération ou de nettoyage.

A la figure 1, il n'a pas été représenté tous les moyens qui assurent la propulsion des produits dans l'installation ni toutes les vannes et organes nécessaires à sa conduite qui sont d'utilisation courante dans le domaine.

Au début d'un cycle de traitement, la résine cationique forte 1 est chargée en cations monovalents principalement constitués de sodium et de potassium. Lors de sa percolation sur cette résine, le lactosérum introduit par l'entrée 2 échange ses ions divalents principalement du calcium et du magnésium contre des ions monovalents. Il faut noter à cet égard que le captage par la résine d'un ion divalent apporte au lactosérum deux ions monovalents si bien qu'à la sortie de la colonne, la nature des charges électriques contenues dans le lactosérum est différente car elles sont entièrement en solution donc confèrent au lactosérum une meilleure conductivité, contrairement aux ions Ca⁺⁺ qui sont partiellement liés à la matière organique. Cette disposition est tout à fait favorable au bon fonctionnement de l'électrodialyseur 8 dans lequel le lactosérum sera introduit.

Le lactosérum subit une préconcentration dans le concentreur 7 (où il perd entre 2/3 et 3/4 de son eau) et en sort à une température comprise entre 30 et 40°C., de préférence 36°C.

Le lactosérum est ensuite introduit dans la boucle 13 tandis qu'une saumure concentrée à environ 35g/l est introduite dans la boucle 19. La déminéralisation du lactosérum s'opère au profit de la saumure dont la teneur en sels passe rapidement à 100g/l. A cette valeur, déterminée par conductivimétrie, elle est régulée par ajout d'une saumure concentrée à 35 g/litre au moyen de l'amenée 15. L'excès de saumure est extrait de la boucle 19 et stocké dans un réservoir 22 en vue de la régénération de la résine 1.

La teneur minérale du lactosérum préconcentré décroît depuis par exemple 23g ou 24g/l. jusqu'à 12g/l. A ce moment on constate que la qualité de la circulation du courant et le rendement faradique sont dégradés au point qu'il faut modifier la concentration en sels de la saumure. Par ajout d'eau 15, cette teneur est descendue à 35-40g/l. et est maintenue à cette valeur jusqu'à obtenir la déminéralisation souhaitée du lactosérum préconcentré. l'excès de saumure est également stocké. Le produit est alors extrait de la boucle 13 par la sortie 14.

On procède ensuite au traitement d'un nouveau batch de lactosérum préconcentré avec cette saumure à 35-40g/l. de sels dans la boucle 19 dont la teneur atteint rapidement 100g/l. où elle stabilisée comme décrit ci-dessus avec récupération de l'excès dans le réservoir 22. La saumure à 35 g/l sert également, comme dit ci-dessus, à réguler la saumure à 100 g/l.

Ce degré de concentration est intéressant à plusieurs titres car d'une part la solution constitue une saumure suffisamment riche en cations, sodium et potassium pour être utilisée telle quelle comme réactif de régénération de la colonne de résine 1 et, d'autre part du fait des équilibres osmotiques, elle constitue un moyen d'extraction d'une fraction d'eau contenue dans le lactosérum circulant dans les cellules 9. La saumure est donc en permanence engendrée par l'électrodialyseur dont le fonctionnement pendant cette première phase d'électrodialyse ne consomme pas d'eau.

L'électrodialyseur 8 peut fonctionner soit par batch soit en continu. Dans ce dernier cas, il est alimenté par plusieurs colonnes de résines en parallèle en amont qui lui sont connectées successivement, le produit circulant en boucle sur l'électrodialyseur en étant soutiré en continu.

A la figure 2 on a représenté le schéma d'une installation variante de la figure 1 notamment adaptée au cas où une préconcentration du lactosérum n'est pas possible ou n'est pas souhaitable. Le lactosérum contient alors classiquement de 5 à 6 grammes de sels par litre. On retrouve sur cette figure 2 des éléments déjà décrits avec les mêmes références.

Le lactosérum issu de la colonne 1 circule dans la boucle 13. La boucle 19 de saumure à 35-40 grammes de sels par litre, comprend les cellules 18 décrites et des cellules 18A dans le même électrodialyseur 8 ou dans un autre électrodialyseur qui constituent pour cette saumure des cellules d'extraction des sels en direction de cellules adjacentes 9A qui sont traversées par une autre saumure de teneur en sels plus importante (100g/l.). Cette saumure circule dans une boucle 19A fermée sur un réservoir 20A de régulation de cette teneur et dont l'excès est stocké dans un réservoir 22A. Ainsi, de manière connue, on procède à une déconcentration du lactosérum et simultanément à une concentration de la saumure.

A la sortie 14, le lactosérum est déminéralisé à 90 - 95 % et peut être extrait du réservoir 11. Selon l'invention si on veut pousser cette déminéralisation, on introduit le lactosérum dans une unité de nanofiltration 24 de laquelle en 25 le lactosérum déminéralisé à 99 % et partiellement concentré (autour de 220 grammes de matière sèche par litre) est extrait. Le perméat de nanofiltration qui est essentiellement constitué d'eau faiblement chargé d'ions, sodium et potassium peut être envoyé dans un réservoir tampon 26 d'où il peut être extrait pour être éliminer ou en revanche conduit à l'entrée 4 de la colonne de résine ou à l'entrée 15 de la boucle 19A. En effet, cette eau faiblement chargée constitue un liquide de lavage tout à fait acceptable pour la résine et également, à la sortie de la colonne, une saumure pour l'électrodialyseur lorsqu'il s'agira de le nettoyer par inversion électrique de son fonctionnement.

Le procédé selon l'invention par les économies qu'il permet notamment en ce qui concerne la réduction d'eau consommée et l'absence de régénérant, ainsi que par l'amélioration importante du fonctionnement d'un électrodialyseur ce qui évite des procédures complexes de nettoyage et une installation complexe pour mettre en oeuvre alternativement ces procédures de nettoyage et les phases du procédé de déminéralisation, est un procédé dont le coût d'exploitation et l'investissement pour sa mise en oeuvre sont notablement réduits par rapport à un procédé classique. En outre, les effets induits sur la pollution et sur les rejets sont considérables et, indépendamment des résultats économiques le procédé selon l'invention répond de manière beaucoup plus adaptée aux exigences réglementaires en matière de protection de l'environnement et de rejet de produits polluants.

Enfin dans une variante de réalisation non représentée, la colonne de résine 1 peut comporter un mélange de résine cationique forte et de résine anionique forte afin d'améliorer encore le fonctionnement du procédé en éliminant une partie au moins des anions du type phosphate ou sulfate et dont la présence est également une gêne dans le fonctionnement des électrodialyseurs. Pour une telle colonne est mise en oeuvre, la saumure décrite ci-dessus convient parfaitement à sa régénération tant du point de vue anionique que cationique sauf à l'additionner d'un peu d'acide pour dissoudre les précipités de sulfate ou de phosphate qui pourraient se produire à l'intérieur de la colonne. Il serait de même intéressant d'aciduler le liquide de lavage.

On notera par ailleurs que les moyens 23 pour réaliser l'inversion électrique du fonctionnement de l'électrodialyseur sont extrêmement simples et peu coûteux.

Enfin, une variante de réalisation du procédé peut comporter une phase finale (aux lieu et place de la nanofiltration) de passage sur des résines échangeuses 27, 28 d'ions (anioniques et cationiques). Des résines adaptées pour ce traitement de finition sont la résine cationique connue sous la référence commerciale RELITE SK1B de "Résindion" et la résine anionique A 345 de la société Mitsubishi Kasaï Corporation, toutes deux très microporeuses.

## Revendications

1. Procédé de déminéralisation d'un liquide contenant en solution des matières organiques et des sels minéraux, comportant les étapes suivantes :
- percolation du liquide sur une résine (1) d'échange d'ions cationique forte, monovalents,
- passage en boucle dans au moins un électrodialyseur (8) dit à deux compartiments comportant une pluralité de membranes anioniques (A) et une pluralité de membranes cationiques (C) intercalées, d'une part d'une quantité (batch) déterminée de liquide issue de l'étape précédente et d'autre part, d'une saumure d'accueil des ions issus du liquide,
- régénération de la résine (1) échangeuse d'ions par de la saumure, caractérisé en ce que l'électrodialyse s'effectue en deux phases, une première phase avec une saumure dont la concentration en sels est maintenue entre 80 et 140 grammes par litre pendant le temps où la concentration en sels du liquide en traitement est supérieure à un seuil déterminé et une seconde phase avec une saumure dont la concentration en sels est maintenue entre 30 et 40 grammes par litre, jusqu'au seuil de déminéralisation souhaité et en ce que la régénération de la résine est réalisée par la saumure la plus concentrée.

2. Procédé de déminéralisation d'un liquide contenant en solution des matières organiques et des sels minéraux, comportant les étapes suivantes :
- percolation du liquide sur une résine (1) d'échange d'ions cationique forte, monovalents,
- passage dans au moins un électrodialyseur (8) dit à deux compartiments comportant une pluralité de membranes anioniques (A) et une pluralité de membranes cationiques (C) intercalées, d'une part du liquide issu de l'étape précédente et d'autre part, d'une saumure d'accueil des ions issus du liquide,
- régénération de la résine (1) échangeuse d'ions par de la saumure, caractérisé en ce que ladite saumure passe également dans un autre électrodialyseur servant à la régulation de sa concentration par déconcentration au profit d'une autre saumure dont la concentration est maintenue entre 80 et 120 g/litres afin de servir à la régénération susdite.

3. Procédé selon l'une des revendications précédentes, caractérisé en ce qu'après l'étape de percolation, le liquide est chauffé à une température comprise entre 30 et 40°C.

4. Procédé selon la revendication 1 et la revendication 3, caractérisé en ce que l'échauffement du liquide est réalisé par la préconcentration.

5. Procédé selon l'une des revendications précédentes caractérisé en ce qu'il comporte une étape supplémentaire de déminéralisation par résines (27, 28) échangeuses d'ions anioniques et cationiques.

6. Procédé selon la revendication 2, caractérisé en ce qu'il comporte une étape supplémentaire de nanofiltration (24) pour parfaire la déminéralisation et concentrer le liquide déminéralisé.

7. Procédé selon la revendication 6, caractérisé en ce que le perméat de nanofiltration est utilisé comme liquide de base pour la saumure

8. Procédé selon la revendication 1 ou la revendication 2, caractérisé en ce qu'aux lieu et place de la résine cationique forte, la résine utilisée est un mélange de résine cationique forte et de résine anionique forte.

## Patentansprüche

1. Verfahren zur Demineralisation einer Flüssigkeit, die organische Stoffe und Mineralsalze gelöst enthält, umfassend die folgenden Schritte:
- Perkolieren der Flüssigkeit durch ein starkes Kationenaustauschharz (1) zum Austauschen einwertiger lonen,
- schleifenförmiges Durchleiten einer bestimmten Menge (einer Charge) an aus dem vorgehenden Schritt stammender Flüssigkeit einerseits und einer Salzlösung zur Aufnahme der aus der Flüssigkeit stammenden lonen andererseits durch mindestens einen sogenannten Zwei-Kammer-Elektrodialysator (8), umfassend eine Vielzahl anionischer Membranen (A) und eine Vielzahl dazwischen angeordneter kationischer Membranen (K),
- Regenerieren des lonenaustauschharzes (1) durch die Salzlösung, dadurch **gekennzeichnet,** daß die Elektrodialyse in zwei Phasen erfolgt, einer ersten Phase mit einer Salzlösung, deren Salzkonzentration auf 80 bis 140 Gramm pro Liter gehalten wird, während der Zeit, in der die Salzkonzentration der zu behandelnden Flüssigkeit über einem vorgegebenen Grenzwert liegt, und einer bis zu dem gewünschten Demineralisationsgrenzwert andauernden zweiten Phase mit einer Salzlösung, deren Salzkonzentration auf 30 bis 40 Gramm pro Liter gehalten wird, und daß das Regenerieren des Harzes durch die Salzlösung mit der höchsten Konzentration erfolgt.

2. Verfahren zur Demineralisation einer Flüssigkeit, die organische Stoffe und Mineralsalze gelöst enthält, umfassend die folgenden Schritte:
- Perkolieren der Flüssigkeit durch ein starkes Kationenaustauschharz (1) zum Austauschen einwertiger lonen,
- Durchleiten der Flüssigkeit, die aus dem vorhergehenden Schritt stammt einerseits und einer Salzlösung zur Aufnahme der aus der Flüssigkeit stammenden lonen andererseits durch mindestens einen sogenannten Zwei-Kammer-Elektrodialysator (8), umfassend eine Vielzahl anionischer Membranen (A) und eine Vielzahl dazwischen angeordneter kationischer Membranen (K),
- Regenerieren des lonenaustauschharzes (1) durch die Salzlösung, dadurch **gekennzeichnet,** daß diese Salzlösung ferner durch einen weiteren Elektrodialysator läuft, der zum Regulieren ihrer Konzentration durch Dekonzentration zugunsten einer weiteren Salzlösung dient, deren Konzentration auf 80 bis 120 g/Liter gehalten wird, um für die obengenannte Regeneration zu dienen.

3. Verfahren nach einem der vorhergehenden Ansprüche, dadurch **gekennzeichnet,** daß die Flüssigkeit nach dem Schritt des Perkolierens auf eine Temperatur zwischen 30 und 40°C erwärmt wird.

4. Verfahren nach Anspruch 1 und Anspruch 3, dadurch **gekennzeichnet,** daß das Erwärmen der Flüssigkeit durch die Vorkonzentration ausgeführt wird.

5. Verfahren nach einem der vorhergehenden Ansprüche, dadurch **gekennzeichnet,** daß es einen zusätzlichen Schritt der Demineralisation durch Anionen- und Kationenaustauschharze (27, 28) umfaßt.

6. Verfahren nach Anspruch 2, dadurch **gekennzeichnet,** daß es einen zusätzlichen Schritt der Nanofiltration (24) umfaßt, um die Demineralisation zu vollenden und die demineralisierte Flüssigkeit zu konzentrieren.

7. Verfahren nach Anspruch 6, dadurch **gekennzeichnet,** daß das Permeat der Nanofiltration als Ausgangsflüssigkeit für die Salzlösung verwendet wird.

8. Verfahren nach Anspruch 1 oder Anspruch 2, dadurch **gekennzeichnet,** daß das an Stelle des starken Kationenharzes verwendete Harz eine Mischung aus starkem Kationenharz und starkem Anionenharz ist.

## Claims

1. A process of demineralizing a liquid containing organic matter and inorganic salts in solution, comprising the following steps:
. the liquid is percolated over a strong cationic ion exchange resin (1) for monovalent ions;
. both a batch of liquid from the preceding step and a brine for receiving ions from that liquid are caused to circulate in loops through at least one "two-compartment" electrodialyzer (8) comprising a plurality of anionic membranes (A) interposed between a plurality of cationic membranes (C); and
. the brine is used to regenerate the ion exchange resin (1),
characterized in that electrodialysis takes place in two stages, a first stage with brine whose salt concentration is maintained in the range 80 g/l to 140 g/l while the salt concentration of the liquid being treated is greater than a determined threshold, and a second stage using a brine whose salt concentration is maintained in the range 30 g/l to 40 g/l until the desired demineralization threshold is reached and in that the more concentrated brine is used to regenerate the resin.

2. A process of demineralizing a liquid containing organic matter and inorganic salts in solution, comprising the following steps:
. the liquid is percolated over a strong cationic ion exchange resin (1) for monovalent ions;
. both the liquid from the preceding step and a brine for receiving ions from that liquid are caused to circulate through at least one "two-compartment" electrodialyzer (8) comprising a plurality of anionic membranes (A) interposed between a plurality of cationic membranes (C); and
. the brine is used to regenerate the ion exchange resin (1), characterized in that said brine circulates also in another electrodialyser used for controlling its concentration by deconcentration for the benefit of another brine whose salt concentration is maintained in the renge 80 to 120 g/l for use in said regeneration step.

3. A process according to any preceding claim, characterized in that after the percolation step, the liquid is maintained at a temperature in the range 30°C to 40°C.

4. A process according to claim 1 and claim 3, characterized in that the liquid is heated by the preconcentration step.

5. A process according to any preceding claim, characterized in that it includes an additional step of demineralization by means of anionic and cationic ion exchange resins (27, 28).

6. A process according to claim 2, characterized in that it includes an additional step of nanofiltration (24) to perform further demineralization and to concentrate the demineralized liquid.

7. A process according to claim 6, characterized in that the nanofiltration permeate is used as raw material for the brine.

8. A process according to claim 1 or claim 2, characterized in that instead of the strong cationic resin, the resin used is a mixture of strong cationic resin and strong anionic resin.
